# FASCICULE DE BREVET EUROPEEN

(11) **EP 0 947 383 B1**
(45) Date de publication et mention de la délivrance du brevet: **11.10.2006**
(21) Numéro de dépôt: 99420088.9
(22) Date de dépôt: 06.04.1999
(51) Int. Cl.: B60N 2/28

(54) **Dispositif de sécurité automobile pour enfant en mousse polyuréthanne**
Polyurethanschaum- Fahrzeug- Kindersicherheitsvorrichtung
Vehicle child safety device in polyurethane foam

(30) Priorité: 03.04.1998 FR 9804405
(43) Date de publication de la demande: 06.10.1999
(73) Titulaire: Société Anonyme Renolux France Industrie, 38230 Charvieu (FR)
(72) Inventeur: Vezinet, Cédric, 69330 Meyzieu (FR); Catin, Joseph, 01800 Saint Jean de Niost (FR)
(74) Mandataire: Thibault, Jean-Marc

(56) Documents cités:
- EP-A- 0 514 003
- EP-A- 0 589 216
- EP-A- 0 770 515
- WO-A-95/22471
- US-A- 4 750 714

## Description

L'invention se rattache au secteur technique des dispositifs de sécurité automobile pour enfant, utilisable à l'arrière et/ou à l'avant des véhicules pour particuliers. Le terme "dispositif de sécurité automobile pour enfant" englobe toutes les catégories de poids, c'est-à-dire de 0 à 36 kg et, par conséquent, tous les types de dispositifs sans restriction ; groupe 0 et groupe 0+ (dispositifs respectivement pour enfant de 0 à 10 kg et de 0 à 13 kg), tels que sièges auto, réhausseur à dossier, sans dossier, ou à réceptacle avant, etc.

La présente invention concerne un élément du dispositif de sécurité, destiné à assurer, plus particulièrement, la réception, la protection et le confort d'un enfant.

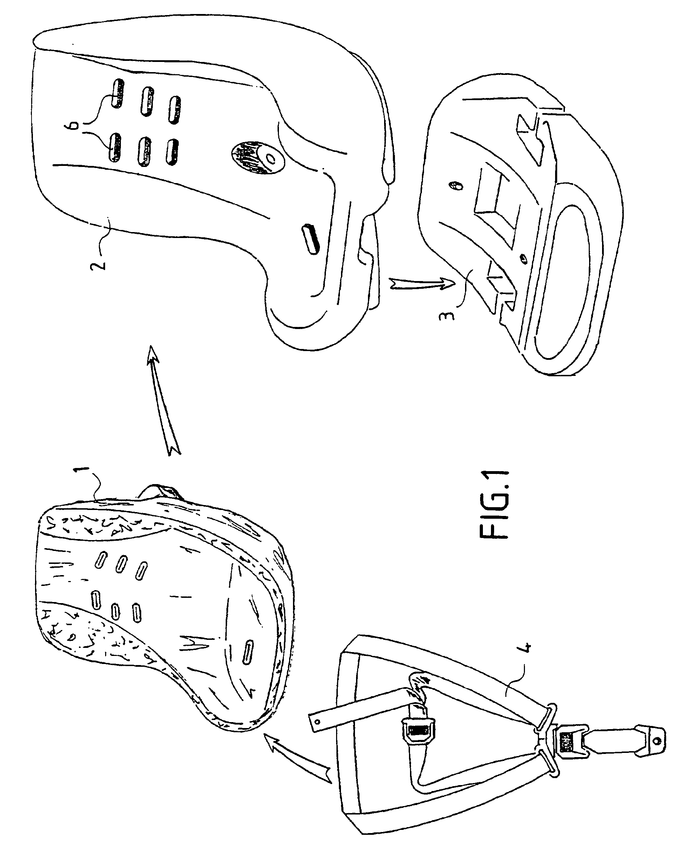

Classiquement, il est connu d'assurer distinctement les fonctions de "réception et de protection" et les fonctions de "confort et garnissage". La figure 1 illustre à échelle réduite, un dispositif classique de sécurité pour un enfant, tel qu'un siège auto, comportant un élément **1** de confort et garnissage et un élément **2** de réception et de protection. Un tel dispositif de sécurité comporte également une embase support **3**, un harnais **4** constitué de sangles et assurant la retenue de l'enfant et des passages **6** pour les sangles Tel est le cas notamment du dispositif de sécurité pour enfants décrit par le document WO 95/22471 comportant un élément de réception et de protection recouvert par un élément de confort est de garnissage et fixé une embase support.

Les fonctions de "réception et de protection" de l'enfant sont, de façon générale, assurées par l'élément **2** constitué :
- soit d'une partie unique constituant l'assise et le dossier du dispositif,
- soit par plusieurs parties constituant respectivement l'assise, le dossier, l'appui-tête ...

Cet élément est relativement rigide et léger, afin de répondre aux exigences des normes et à la commodité attendue par le consommateur. C'est pourquoi, leur constitution est principalement basée sur :
- des plastiques (polypropylène, polyéthylène, ABS) soufflés, injectés, thermoformés, ou rotomoulés,
- des polystyrènes,
que peuvent venir renforcer des armatures tubulaires, notamment métalliques.
- d'un élément de confort de quelques millimètres d'épaisseur représenté par une ouate ou une mousse polyéther ou polyester,
- d'un élément décoratif et de finition représenté par un textile.

Ces deux éléments forment un complexe et sont liés de différentes façons possibles comme par collage, flammage ou matelassage ...

Le principal inconvénient des dispositifs de sécurité actuels réside dans leur fermeté, et le manque de confort qu'elle occasionne. L'aspect confort se limite effectivement à la faible épaisseur (environ 10-12 mm) de la housse. Cette épaisseur est d'ailleurs d'autant plus insuffisante et inadaptée que l'enfant grandit, l'action de son poids réduisant toujours plus l'épaisseur et, par conséquent, l'efficacité de la mousse.

L'objet de l'invention vise à remédier aux inconvénients énoncés ci-dessus en proposant un dispositif de sécurité automobile adapté pour apporter un confort supplémentaire à l'enfant tout en conservant un parfait maintien et une sécurité optimale pour l'enfant dans le respect des normes en vigueur relatives aux dispositifs de sécurité automobile pour enfants.

Un autre but selon l'invention est de proposer un dispositif de sécurité automobile permettant d'obtenir des formes galbées offrant l'avantage de développer l'ergonomie et l'esthétique d'un tel dispositif.

Pour atteindre les objectifs ci-dessus, l'objet de l'invention concerne un dispositif de sécurité automobile destiné à assurer la réception, la protection et le confort pour un enfant.

Selon l'invention, le dispositif comporte au moins un élément de réception, de protection et de confort pour l'enfant, réalisé en une mousse polyuréthanne souple moulée, dans laquelle est insérée une armature de renforcement.

Selon une caractéristique avantageuse, l'objet de l'invention réside dans l'application aux dispositifs de sécurité pour enfant, du moussage polyuréthanne. Cette technique, déjà existante et utilisée à d'autres fins, consiste à couler "à froid" ou "à chaud" dans un moule ouvert ou fermé, les composants liquides, catalyseurs et agents d'expansion, intervenant dans la réaction chimique permettant l'obtention de la mousse.

La mousse polyuréthanne ainsi obtenue est dite souple du fait de la faible densité (inférieure à 80 kg/m³) requise par rapport à son utilisation. Il est obtenu le ou les éléments en mousse d'une épaisseur ne dépassant généralement pas 10 cm. Cet élément ou chacun de ces éléments assurera individuellement l'ensemble des fonctions d'un dispositif de sécurité pour enfant citées précédemment (réception, protection, confort).

Des inserts métalliques, plastiques, bois et textiles formant une armature sont également préalablement placés dans le moule, afin de renforcer et de garnir l'élément.

Selon une autre caractéristique avantageuse, la présente invention prévoit une solution technique, concernant les dispositifs de sécurité nécessitant des passages de sangles au travers de la mousse pour le positionnement du harnais. Cette solution technique repose sur l'utilisation d'un système guide-sangle assurant un confort optimal à l'enfant.

Diverses autres caractéristiques ressortent de la description faite ci-dessous en référence aux dessins annexés qui montrent, à titre d'exemples non limitatifs, des formes de réalisation et de mise en oeuvre de l'objet de l'invention.
La **fig. 1** illustre à titre d'exemple, les différents éléments constitutifs d'un dispositif selon l'art antérieur, de sécurité pour un enfant.
La **fig. 2** illustre un exemple de réalisation d'un dispositif de sécurité conforme à l'invention.
La **fig. 3** représente un exemple de réalisation d'un système guide pour sangle.
La **fig. 4** est une vue en coupe élévation d'un exemple d'application d'un dispositif de sécurité conforme à l'invention.

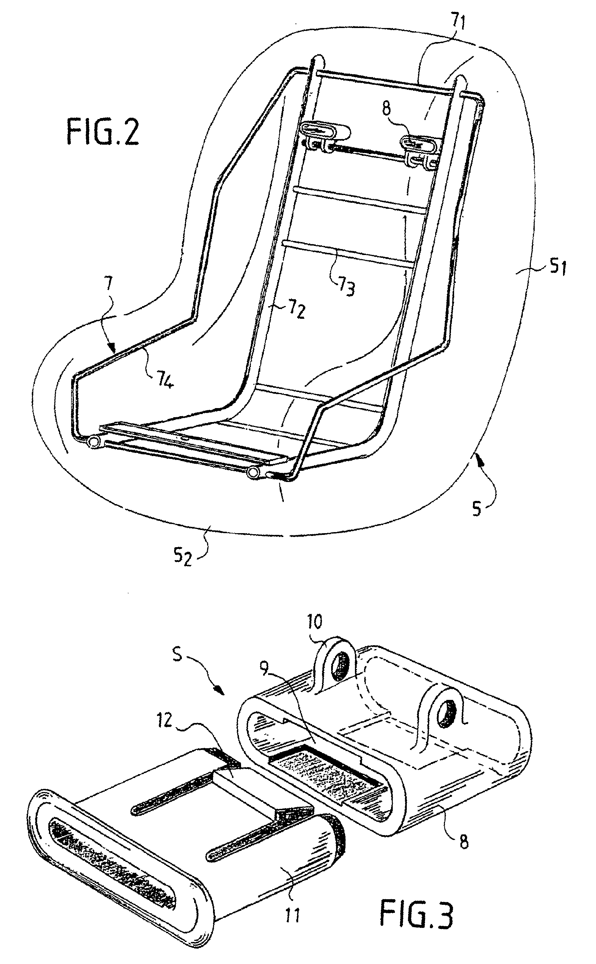

La **fig. 2** représente un élément **5** d'un dispositif de sécurité, destiné à assurer la réception, la protection et le confort d'un enfant, obtenu par moussage polyuréthanne. L'élément de réception, de protection et de confort **5** est ainsi obtenu par moulage, au moyen d'une coulée, notamment à froid dans un moule ouvert ou fermé, des divers constituants permettant d'obtenir un moussage polyuréthanne. Chaque élément **5** se présente ainsi sous la forme d'un bloc de mousse.

Chaque élément **5** obtenu en mousse polyuréthanne assure individuellement les fonctions de réception, soutien, confort et garnissage. La souplesse de la mousse et son épaisseur conséquente garantissent le confort de l'enfant quelle que soit sa morphologie. L'utilisation de la technique du moulage "à froid" ou "à chaud" pour l'obtention de l'élément **5** assure une grande liberté au niveau des galbes et de l'ergonomie pour une parfaire adaptation au corps de l'enfant et, par conséquent, une meilleure réception et un meilleur maintien de ce dernier. De plus, l'obtention par moulage confère également à la mousse une meilleure résistance à l'arrachement et, par conséquent, un meilleur comportement dynamique.

Selon une caractéristique avantageuse de l'invention, des inserts métalliques ou autres sont placés préalablement dans le moule (avant la coulée). Ces inserts **7** qui forment ainsi une armature de renforcement, ont pour fonction d'assurer le bon comportement dynamique de l'élément **5**. Ils permettent effectivement de renforcer la mousse en cas d'accident. Les inserts sont ainsi parfaitement liés à la mousse et l'ensemble constitue une solution idéale pour la protection et le confort de l'enfant. Ainsi, tel que cela ressort clairement de la **fig. 2,** l'armature de renforcement **7** est enveloppée par la mousse polyuréthanne selon une épaisseur adaptée pour conférer un confort pour l'enfant.

Dans l'exemple de réalisé illustré à la **fig. 2**, l'armature de renforcement **7** comporte une structure principale **7**_{**1**} dont le profil est en forme de "L" pour définir un dossier **5**_{**1**} et une assise **5**_{**2**} pour l'élément **5**. Par exemple, cette structure principale **7**_{**1**} comporte deux longerons **7**_{**2**} reliés entre-eux par des traverses **7**_{**3**}**.** Dans l'exemple illustré, l'armature de renforcement **7** comporte également deux structures latérales 7₄ pour définir les côtés latéraux ou les parois latérales de l'élément **5**. Chaque structure latérale **7**_{**4**} est constituée, par exemple, par un renfort décalé latéralement vers l'extérieur par rapport au longeron voisin pour former un côté latéral. Bien entendu, les renforts sont noyés également dans la mousse polyuréthanne.

L'armature de renforcement **7** peut être constituée de plusieurs pièces métalliques assemblées entre elles, telles que tubes, fils, fer plat et éléments de visserie. L'armature de renforcement **7** peut aussi être formée d'une pièce unique en matière plastique rigide réalisée par injection ou thermoformage.

Selon une caractéristique de réalisation, l'élément de réception, de protection et de confort **5** est pourvu d'un garnissage assuré par un revêtement textile appliqué directement sur la mousse en le plaçant préalablement dans le moule. Le textile est mis en forme au fond du moule par aspiration : il s'agit d'un moussage dit "in situ".

La finition textile peut aussi s'obtenir par découpage et confection : l'habillage est alors rendu solidaire de la mousse par différentes techniques, comme par exemple, une application de colle permettant l'adhésion du textile sur la mousse, ou encore l'utilisation de bandes auto-agrippantes (exemple : bandes de marque Velcro) placées dans le moule avant moussage, ce qui permet de les insérer à la surface de l'élément en mousse. La bande auto-agrippante, alors directement liée à la mousse dans laquelle elle est insérée, propose une partie apparente correspondant à sa partie munie de crochets et permet ainsi l'adhésion du garnissage textile à l'élément en mousse.

Selon une autre caractéristique de l'invention, l'élément de réception, de protection et de confort **5** est destiné à être équipé d'au moins un système **S** pour le guidage ou le passage d'une sangle. Chaque système guide-sangle **S** a pour fonction, d'une part, la protection de la mousse dans les passages de sangle contre l'abrasion due aux frottements de la sangle et, d'autre part, le confort optimal de l'enfant. Tel que cela ressort plus précisément de la **fig. 3,** chaque système guide-sangle **S** comporte, notamment, une partie femelle **8** constituée sous la forme d'un manchon. Dans un exemple de réalisation, la partie femelle **8** est insérée dans la mousse en étant placée dans la mousse avant l'opération de moussage. A cet effet, le guide-sangle **S** comporte des moyens assurant sa liaison avec l'armature de renforcement **7**. Cette liaison avec les inserts ou l'armature **7** peut être assurée, par exemple, par des anneaux **10** de montage sur les traverses **7**_{**3**}**.**

Cette liaison assure l'immobilisation complète et, par conséquent, le maintien en position du guide-sangle **S** lorsque celui-ci est soumis aux efforts engendrés par un éventuel accident. Dans le cas de multiples passages de sangle rapprochés, tels que ceux représentés sur la **fig. 1**, une pièce unique, constituée de plusieurs passages, peut assurer en variante les fonctions de la partie femelle de chacun des guides-sangles.

Chaque système de guide-sangle **S** comporte, de préférence, une partie mâle **11** destinée à être positionnée après le garnissage textile, par emboîtement dans la partie femelle **8**. La partie mâle **11** se présente sous la forme d'un manchon de forme complémentaire à la partie femelle et est destinée à coulisser à l'intérieur de cette partie femelle. La partie mâle **11** possède à son extrémité, une partie **12** d'anti-retour empêchant le désemboîtement des parties mâle et femelle. La partie d'anti-retour **12** est destinée à coopérer avec une butée **9** aménagée sur la surface intérieure de la partie femelle **8** autorisant ainsi un coulissement limité de la partie mâle tout en la maintenant emboîtée avec la partie femelle **8**.

Le coulissement de la partie mâle **11** dans la partie femelle **8** garantit le confort optimal de l'enfant en permettant au système de guide-sangle de s'adapter dimensionnellement à la compressibilité de la mousse.

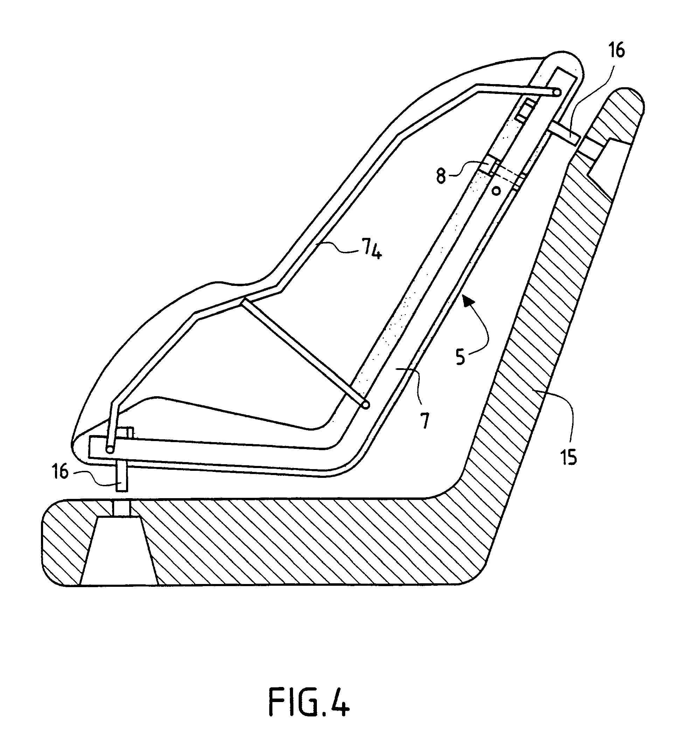

La **fig. 4** illustre un exemple de montage d'un élément de réception, de protection et de confort **5**, sur un bâti **15** pour former, par exemple, un siège auto. Dans le cas d'un montage de l'élément de réception, de protection et de confort **5** sur un bâti, l'élément **5** est pourvu d'organes de reprise **16** assemblés sur l'armature de renforcement ou présentés par l'armature de renforcement **7** et accessibles de l'extérieur de l'élément **5**. Ces organes de reprise **16** peuvent être constitués par des tiges filetées par exemple, destinées à être fixées sur le bâti **15** par tous moyens appropriés.

L'invention n'est pas limitée aux exemples décrits et représentés, car diverses modifications peuvent y être apportées sans sortir de son cadre.

## Revendications

1. Dispositif de sécurité automobile pour enfant destiné à assurer la réception, la protection et le confort pour un enfant, **caractérisé en ce qu'**il comporte au moins un élément de réception, de protection et de confort (**5**) pour l'enfant, réalisé en une mousse polyuréthanne souple moulée, dans laquelle est insérée une armature de renforcement (**7**).

2. Dispositif selon la revendication 1, **caractérisé en ce que** l'élément de réception, de protection et de confort (**5**) est réalisé par moulage au moyen d'une coulée dans un moule ouvert ou fermé dans lequel l'armature (**7**) a été préalablement placée.

3. Dispositif selon la revendication 1, **caractérisé en ce que** l'élément de réception, de protection et de confort (**5**) est réalisé en une mousse polyuréthanne souple moulée dont l'épaisseur est inférieure ou égale à 10 cm.

4. Dispositif selon l'une des revendications 1 à 3, **caractérisé en ce que** l'élément de réception, de protection et de confort (**5**) est réalisé en une mousse polyuréthanne souple moulée recouverte au moins en partie, par un revêtement textile.

5. Dispositif selon la revendication 1 ou 2, **caractérisé en ce que** l'armature de renforcement (7) comporte :
- une structure principale (**7**_{**1**}) en "L" définissant un dossier (**5**_{**1**}) et une assise (**5**_{**2**}) pour l'élément,
- et des structures latérales (**7**_{**4**}) pour définir les côtés latéraux de l'élément.

6. Dispositif selon la revendication 5, **caractérisé en ce que** la structure principale(**7**_{**1**}) est constituée par deux longerons (**7**_{**2**}) reliés entre-eux par des traverses (**7**_{**3**}), tandis que chaque structure latérale (**7**_{**4**}) est constituée par un renfort décalé latéralement vers l'extérieur par rapport au longeron voisin.

7. Dispositif selon les revendications 1, 2 ou 5, **caractérisé en ce que** l'armature de renforcement **7** est formée par une pièce unique en matière plastique rigide.

8. Dispositif selon l'une des revendications 1 à 4, **caractérisé en ce que** l'élément de réception, de protection et de confort (**5**) comporte au moins un système guide-sangle (**S**) présentant une partie femelle (**8**) montée dans la mousse polyuréthanne et assurant le passage de la sangle, la partie femelle (**8**) étant équipée de moyens (**10**) assurant la liaison avec l'armature de renforcement (**7**), préalablement au moulage à froid de la mousse polyuréthanne souple.

9. Dispositif selon la revendication 8, **caractérisé en ce que** l'élément de réception, de protection et de confort (**5**) comporte une série de systèmes guide-sangle (**S**) dont les parties femelles (**8**) sont reliées entre elles pour former une pièce unique.

10. Dispositif selon la revendication 9, **caractérisé en ce que** chaque système guide-sangle (**S**) comporte une partie mâle (**11**) destinée à être emboîtée dans une partie femelle (**8**), avec une possibilité de coulissement limité, à l'aide de moyens d'anti-retour et de butée (**9, 12**).

11. Dispositif selon l'une des revendications 1 à 4, **caractérisé en ce que** l'élément de réception, de protection et de confort (**5**) est équipé d'organes de reprise (**16**) assemblés à l'armature de renforcement (**7**) et accessibles de l'extérieur pour permettre l'adaptation sur un bâti (**15**).

## Claims

1. A vehicle child safety device intended to provide reception, protection and comfort for a child, **characterized in that** it includes at least one reception, protection and comfort member (5) for the child, made in a moulded flexible polyurethane foam, in which a strengthening frame (7) is inserted.

2. The device according to claim 1, **characterized in that** the reception, protection and comfort member (5) is made by moulding by means of casting in an open or closed mould in which the frame (7) has been placed beforehand.

3. The device according to claim 1, **characterized in that** the reception, protection and comfort member (5) is made in moulded flexible polyurethane foam, the thickness of which is less than or equal to 10 cm.

4. The device according to any of claims 1 to 3, **characterized in that** the reception, protection and comfort member (5) is made in moulded flexible polyurethane foam, at least partly covered with a textile coating.

5. The device according to claim 1 or 2, **characterized in that** the strengthening frame (7) includes:
- an "L"-shaped main structure (7₁) defining a back (5₁) and a seat (5₂) for the member,
- and side structures (7₄) for defining the lateral sides of the member.

6. The device according to claim 5, **characterized in that** the main structure (7₁) consists of two longitudinal bars (7₂) connected to each other by crosspieces (7₃), whereas each side structures (7₄) is formed by a reinforcement laterally shifted outwards relatively to the neighbouring longitudinal bar.

7. The device according to claim 1, 2 or 5, **characterized in that** the strengthening frame 7 is formed by a single part in stiff plastic.

8. The device according to any of claims 1 to 4, **characterized in that** the reception, protection and comfort member (5) includes at least a strap-guide (S) system having a female portion (8) mounted in the polyurethane foam and providing passage for the strap, the female portion (8) being fitted out with means (10) providing the connection with the strengthening frame (7), prior to cold moulding of the flexible polyurethane foam.

9. The device according to claim 8, **characterized in that** the reception, protection and comfort member (5) includes a series of strap-guide systems (S), the female portions of which (8) are connected to each other in order to form a single part.

10. The device according to claim 9, **characterized in that** each strap-guide system (S) includes a male portion (11) intended to be fitted into a female portion (8), with limited slidability, by backstop and stop means (9, 12).

11. The device according to any of claims 1 to 4, **characterized in that** the reception, protection, comfort member (5) is fitted with load-spreading members (16) assembled with the strengthening frame (7) and accessible from the outside so as to allow it to be adapted on a framework (15).

## Patentansprüche

1. Automobilsicherheitsvorrichtung für ein Kind, die dazu vorgesehen ist, die Aufnahme, den Schutz und den Komfort für ein Kind sicherzustellen, **dadurch gekennzeichnet, daß** sie wenigstens ein aus einem gegossenen nachgiebigen Polyurethanschaum, in den eine Verstärkungsbewehrung (7) eingesetzt ist, realisiertes Element für die Aufnahme, den Schutz und den Komfort (5) für das Kind umfaßt.

2. Vorrichtung nach Anspruch 1, **dadurch gekennzeichnet, daß** das Element für die Aufnahme, den Schutz und den Komfort (5) durch Formen mittels eines Flusses in eine offene oder geschlossene Form ausgeführt wird, in der die Bewehrung (7) vorher angeordnet worden ist.

3. Vorrichtung nach Anspruch 1, **dadurch gekennzeichnet, daß** das Element für die Aufnahme, den Schutz und den Komfort (5) aus einem gegossenen nachgiebigen Polyurethanschaum ausgeführt ist, dessen Dicke kleiner oder gleich 10 cm ist.

4. Vorrichtung nach einem der Ansprüche 1 bis 3, **dadurch gekennzeichnet, daß** das Element für die Aufnahme, den Schutz und den Komfort (5) aus einem gegossenen nachgiebigen Polyurethanschaum ausgeführt ist, der wenigstens teilweise durch einen Textilüberzug bedeckt ist.

5. Vorrichtung nach Anspruch 1 oder 2, **dadurch gekennzeichnet, daß** die Verstärkungsbewehrung (7) umfaßt:
- eine Hauptstruktur (7₁) in "L"-Form, die eine Rücklehne (5₁) und einen Sitz (5₂) für das Element definiert,
- und Seitenstrukturen (7₄), um die Seiten des Elements zu definieren.

6. Vorrichtung nach Anspruch 5, **dadurch gekennzeichnet, daß** die Hauptstruktur (7₁) aus zwei Hauptträgern (7₂) besteht, die untereinander durch Querstreben (7₃) verbunden sind, während jede Seitenstruktur (7₄) aus einer Verstärkung besteht, die seitlich nach außen im Verhältnis zum benachbarten Träger versetzt ist:

7. Vorrichtung nach einem der Ansprüche 1, 2 oder 5, **dadurch gekennzeichnet, daß** die Verstärkungsbewehrung (7) aus einem einzigen Teil aus starrem Kunststoffmaterial ausgebildet ist.

8. Vorrichtung nach einem der Ansprüche 1 bis 4, **dadurch gekennzeichnet, daß** das Element für die Aufnahme, den Schutz und den Komfort (5) wenigstens ein Gurtführungssystem (S) umfaßt, das ein weibliches Teil (8) aufweist, das in dem Polyurethanschaum angebracht ist und den Durchtritt des Gurtes sichert, wobei das weibliche Teil (8) mit Mitteln (10) ausgerüstet ist, die die Verbindung mit der Verstärkungsbewehrung (7) sicherstellen, vor der Kaltformung des nachgiebigen Polyurethanschaums.

9. Vorrichtung nach Anspruch 8, **dadurch gekennzeichnet, daß** das Element für die Aufnahme, den Schutz und den Komfort (5) eine Reihe von Gurtführungssystemen (S) umfasst, deren weibliche Teile (8) untereinander verbunden sind, um ein einziges Teil zu bilden.

10. Vorrichtung nach Anspruch 9, **dadurch gekennzeichnet, daß** jedes Gurtführungssystem (S) ein männlichen Teil (11) umfaßt, das dazu vorgesehen ist, in ein weibliches Teil (8) eingepaßt zu werden mit einer mit Hilfe von Sperr- und Anschlagmitteln (9, 12) begrenzten Verschiebemöglichkeit.

11. Vorrichtung nach einem der Ansprüche 1 bis 4, **dadurch gekennzeichnet, daß** das Element für die Aufnahme, den Schutz und den Komfort (5) mit Rückhalteorganen (16) ausgerüstet ist, die an der Verstärkungsbewehrung (7) angebracht sind und von außen zugänglich sind, um die Anpassung an ein Gestell (15) zu erlauben.
